**Europäisches Patentamt**

**European Patent Office**

**Office européen des brevets**

(19)

(11) Veröffentlichungsnummer: **0 153 587**

**B1**

(12)

# EUROPÄISCHE PATENTSCHRIFT

(45) Veröffentlichungstag der Patentschrift:
**12.07.89**

(21) Anmeldenummer: **85100744.3**

(22) Anmeldetag: **25.01.85**

(51) Int. Cl.⁴: **C 08 L 21/00,** C 08 L 33/04, C 08 J 3/00

(54) Elastomere thermoplastische Formmassen und deren Herstellung.

(30) Priorität: **02.02.84 DE 3403576**

(43) Veröffentlichungstag der Anmeldung:
**04.09.85 Patentblatt 85/36**

(45) Bekanntmachung des Hinweises auf die Patenterteilung:
**12.07.89 Patentblatt 89/28**

(84) Benannte Vertragsstaaten:
**BE CH DE FR GB IT LI NL**

(56) Entgegenhaltungen:
**FR-A-2 354 369**
**US-A-4 173 556**
**US-A-4 327 199**

(73) Patentinhaber: **BASF Aktiengesellschaft, Carl-Bosch- Strasse 38, D-6700 Ludwigshafen (DE)**

(72) Erfinder: **McKee, Graham Edmund, Dr., Kastanienweg 8, D-6940 Weinheim (DE)**
Erfinder: **Ohlig, Hilmar, Friedenstrasse 111, D-6750 Kaiserslautern (DE)**
Erfinder: **Reimann, Horst, Dr., Adelheidstrasse 26, D-6520 Worms 1 (DE)**
Erfinder: **Sterzel, Hans- Josef, Dr., Wasgauring 3, D-6701 Dannstadt- Schauernheim (DE)**

**Beschreibung**

Es ist bekannt, die Schlagzähigkeit von thermoplastischen Polyamiden dadurch zu verbessern, daß man kautschukelastische Polymerisate zumischt. Letztere sollen in möglichst feiner Verteilung im Polykondensat vorliegen. Aus der DE-OS-3 019 233 ist bekannt, daß Zusätze von relativ kleinen Mengen an Polyamiden zu gepfropften Polybutadienkautschuken, die aus weitgehend vernetzten Teilchen definierter Größe aufgebaut sind zu einer guten thermoplastischen Verarbeitbarkeit der Pfropfpolymerisate führt. Solche elastomere thermoplastische Formmassen weisen außer der guten thermoplastischen Verarbeitbarkeit eine gute Schlagzähigkeit bis -40°C auf. Diese elastomeren elastischen Formmassen sind jedoch noch hinsichtlich ihrer übrigen Eigenschaften wie Shore-Härte, Reißfestigkeit, Reißdehnung, Abrieb, E-Modul und Wärmeformbeständigkeit verbesserungsbedürftig.

Es war deshalb die technische Aufgabe gestellt, elastomere thermoplastische Formmassen mit guter Verarbeitbarkeit und hoher Schlagzähigkeit zur Verfügung zu stellen, die außerdem eine hohe Lochkerbschlagzähigkeit haben und sich durch Abriebfestigkeit, Härte, Wärmeformbeständigkeit, glatte Oberfläche und Alterungsbeständigkeit auszeichnen.

Diese Aufgabe wird gelöst durch elastomere thermoplastische Formmassen, enthaltend:

A) 5 bis 50 Vol.-Teile eines mindestens teilkristallinen thermoplastischen Polymeren mit einem Schmelzpunkt über 160°C als kohärente Phase;

B) 95 bis 50 Vol.-Teilen mindestens eines durch Emulsionspolymerisation hergestellten in der Komponente A dispergierten vernetzten kautschukelastischen Polymerisats mit einer Glasübergangstemperatur Tg unter -10°C, wobei die Summe von A und B 100 Vol.-Teile beträgt, mit der Maßgabe, daß die Mischung aus A und B eine um 5 bis 40°C niedrigere Vicaterweichungstemperatur, gemessen nach DIN 53 460, als das thermoplastische Polymere A aufweist, und das kautschukelastische Polymerisat B einen Quellungsindex in Toluol von 2 - 8 hat und an der Oberfläche der Teilchen Molekülgruppen aufweist, die eine Haftung an den Molekülen des Polymeren A bewirken.;

C) gegebenenfalls übliche Hilfsstoffe in wirksamen Mengen.

Die erfindungsgemäßen elastomeren thermoplastischen Formmassen weisen eine hohe Lochkerbschlagzähigkeit und verbesserte Abriebfestigkeit auf. Daneben zeichnen sie sich durch erhöhte Härte, hohe Wärmeformbeständigkeit, glatte Oberfläche sowie Alterungsbeständigkeit aus.

Als Komponente A enthalten die elastomeren thermoplastischen Formmassen 5 bis 50 Vol.-Teile eines mindestens teilkristallinen thermoplastischen Polymeren mit einem Schmelzpunkt über 160°C. Der Schmelzpunkt wird bestimmt nach DIN 53 736. Vorteilhaft enthalten die thermoplastischen Polymeren A mindestens 20 %, insbesondere mindestens 30 % kristalline Anteile.

Bevorzugte thermoplastische Polymere A sind Polyamide, lineare gesättigte Polyester oder Polyacetale. Besondere technische Bedeutung haben Polyamide und lineare gesättigte Polyester erlangt.

Geeignete Polyamide erhält man durch Kondensation äquimolarer Mengen einer gesättigten Dicarbonsäure mit 4 bis 12 Kohlenstoffatomen mit einem Diamin mit 4 bis 14 Kohlenstoffatomen. Besonders bevorzugt sind Kondensate aus $\alpha$, $\omega$-Alkandicarbonsäuren mit 6 bis 12 Kohlenstoffatomen mit einem $\alpha$,$\omega$-Alkandiamin mit 6 bis 8 Kohlenstoffatomen. Beispielhaft seien genannt Polyhexamethylenadipinsäureamid, Polyhexamethylenazelainsäureamid, Polyhexamethylensebacinsäureamid, Polyhexamethylendodecandisäureamid. Geeignete Polyamide leiten sich auch von Lactamen mit 7 bis 13 Ringgliedern ab. Geeignete durch Polymerisation von Lactamen erhältliche Polyamide sind beispielsweise Polycaprolactam oder Polylaurinlactam. Weiterhin sind geeignete Kondensate solche aus Poly-11-aminoundecansäure. Es ist auch möglich, Polyamide zu verwenden, die durch Copolymerisation zweier oder mehrerer der obengenannten Polymeren hergestellt worden sind, z. B. Copolymere aus Adipinsäure, Isophthalsäure und Hexamethylendiamin. Vorzugsweise sind die Polyamide linear und haben einen Schmelzpunkt von mehr als 200°C. Besondere technische Bedeutung haben Polycaprolactam, Polylaurinlactam, Polyhexamethylenadipinsäureamid und Polyhexamethylensebacinsäureamid erlangt.

Die verwendeten Polyamide haben im allgemeinen eine relative Viskosität von 2 bis 5, gemessen in 1 gew.-%-iger Lösung in Schwefelsäure bei 23°C.

Besonders geeignet sind Polyamide mit einer relativen Viskosität von 2,5 bis 4,0.

Geeignete Polyacetale sind beispielsweise Polyoxymethylene wie Homopolymere des Formaldehyds oder Copolymere des Formaldehyds sowie des Trioxans mit cyclischen und oder linearen Formalen, z. B. 1,3-Dioxolan, Butandiolformal oder Epoxiden wie Ethylen oder Propylenoxid.

Die Homopolymeren haben in der Regel thermisch stabile Endgruppen wie Ester- oder Ethergruppen. Die Copolymeren des Formaldehyds oder des Trioxans weisen vorteilhaft mehr als 50, insbesondere mehr als 75 % Oxymethylengruppen auf. Besonders bewährt haben sich Copolymere, in denen mindestens 0,1 % Gruppen des Comonomeren enthalten sind, die mindestens 2 benachbarte Kohlenstoffatome in der Kette haben. Besondere technische Bedeutung haben Polyacetale erlangt, die 0,5 bis 10 %, insbesondere 1 bis 5 % Comonomere enthalten. Solche Copolmyere sind in an sich bekannter Weise durch kationische Copolymerisation von Trioxan mit geeigneten Comonomeren wie cyclischen Ethern oder Acetalen, z. B. Ethylenoxid, 1,3-Dioxolan, 1,3-Dioxan, 1,3-Dioxyacylcycloheptan oder mit linearen Oligo- oder Polyformalen, ferner Polybutandiolformal erhältlich. In der Regel haben die verwendeten Polyacetale ein Molekulargewicht von 20 000 bis 150 000.

Bevorzugte lineare gesättigte Polyester haben die Formel -G(SG)$_n$- in der S einen Dicarbonsäurerest bezeichnet, der sich von Alkan und/oder Benzol oder Naphthalindicarbonsäuren herleitet, G Diolreste bezeichnet, die sich von aliphatischen oder aromatischen Diolen herleiten und n eine ganze Zahl größer 30 ist. Ein wesentliches Merkmal der verwendeten Polyester ist, daß sie zumindestens zu 20 % kristallin sind. Die Kristallinität läßt sich durch bekannte physikalisch-chemische Methoden, z. B. Differentialthermoanalyse oder Röntgenstrukturanalyse messen. Vorteilhaft beträgt die Kristallinität mehr als 40 %. Der Kristallit-Schmelzpunkt der verwendeten Polyester beträgt vorteilhaft 160 bis 260°C.

Vorteilhaft haben die Polyester Grenzviskositäten, gemessen in Phenol/o-Dichlorbenzol im Gewichtsverhältnis 3 : 2 in 0,5 gew.-%-iger Lösung bei 25°C von 0,5 bis 1,0, insbesondere 0,6 bis 0,8. Bevorzugte mittlere Polymerisationsgrade der Polyester sind von 30 bis 160, insbesondere 80 bis 140.

Besonders bevorzugte Polyester leiten sich von Alkandicarbonsäuren mit 6 bis 12 Kohlenstoffatomen oder Benzoldicarbonsäuren sowie Alkandiolen mit 2 bis 12 Kohlenstoffatomen ab. In technisch bedeutsamen Polyestern leiten sich mindestens 50 Mol.-% der Dicarbonsäurereste von Terephthalsäure ab sowie mindestens 50 Mol.-% der Diolreste leiten sich von Ethylenglykol, 1,4-Butandiol oder 1,6-Hexandiol. Es versteht sich, daß der Rest sich dann von anderen der aufgeführten Dicarbonsäuren oder Diolen ableitet.

Geeignete Dicarbonsäuren sind beispielsweise Adipinsäure, Azelainsäure, Glutarsäure, Sebacinsäure, Naphthalindicarbonsäure-2,6, Naphthalindicarbonsäure-2,7, Terephthalsäure, Isophthalsäure. Geeignete Diole sind beispielsweise Ethylenglykol, Butandiol-1,4, Hexandiol-1,6 oder Dimethylolcyclohexan.

Besondere technische Bedeutung haben Polyethylenterephthalat und Polybutglenterephthalat erlangt.

Die erfindungsgemäßen Formmassen enthalten 5 bis 50 Vol.-Teile, insbesondere 15 bis 30 Vol.-Teile der oben aufgeführten thermoplastischen Polymeren als kohärente Phase, bezogen auf die Komponenten A und B.

Die erfindungsgemäßen elastomeren thermoplastischen Formmassen enthalten als Komponente B 95 bis 50 Vol.-Teile, insbesondere 85 bis 70 Vol.-Teile mindestens eines durch Emulsionspolymerisation hergestellten, in der Komponente A dispergierten, vernetzten kautschukelastischen Polymerisats mit einer Glasübergangstemperatur Tg unter -10°C, wobei die Summe von A und B 100 Gew.-Teile beträgt.

Es ist ein wesentliches Merkmal der verwendeten kautschukelastischen Polymerisate, daß sie soweit vernetzt sind, damit sie in dem thermoplastischen Polymerisat keine kohärente Phase bilden.

Derartige kautschukartige Polymerisate sind an sich bekannt. Sie werden hergestellt durch Emulsionspolymerisation von geeigneten Monomeren wie Butadien, Isopren, höheren Alkylestern der Acrylsäure oder Methacrylsäure, gegebenenfalls unter Mitverwendung von bis zu 30 Gew.-% an Monomeren, die bei der Homopolymerisation harte Polymerisate liefern, wie Styrol, Acrylnitril, Methylacrylat oder Methylmethacrylat. Die Technik der Emulsionspolymerisation ist ausführlich beschrieben in Houben-Weyl, Methoden der organischen Chemische, Band XII, 1 (1961), Seiten 133 bis 406.

Um eine ausreichende Vernetzung zu bewirken, werden vorteilhaft 5 bis 10 Gew.-%, bezogen auf die Monomeren an Vernetzungsmitteln, z. B. bifunktionelle Monomere wie Butandioldiacrylat oder Dicyclodecenylacrylat mitverwendet.

Besonders vorteilhafte kautschuk-elastische Polymerisate sind aufgebaut aus Estern der (Meth)acrylsäure mit bis zu 15 Kohlenstoffatomen sowie 5 bis 10 Gew.-% radikalisch vernetzbaren Comonomeren mit 2 oder mehr Doppelbindungen pro Molekül. Besonders geeignete Ausgangsstoffe sind n-Butylacrylat oder Ethylhexylacrylat.

Die kautschukelastischen Polymerisate enthalten haftungsfördernde Gruppen, wie Carboxylgruppen, Carbonsäureamidgruppen, Carbonsäureanhydridgruppen oder Epoxygruppen an der Oberfläche, die eine Haftung an den Molkülen des Polymeren A bewirken. Dies wird bewirkt, indem man als Comonomere Acryl oder Methacrylsäure, deren Amide, Glycidylacrylat anstelle der freien Säure auch tert.-Butylacrylat als Monomere in einer Menge von 0,1 bis 10 Gew.-% mitverwendet.

Besonders vorteilhaft ist es, wenn man auf das kautschukelastische Polymerisat eine Hülle aufpfropft, die eine Glasübergangstemperatur unterhalb -10°C hat und die haftungsvermittelnden monomeren Bausteine enthält. Besonders bewährt haben sich als Pfropfmonomere Ester der Acrylsäure wie n-Butglacrylat mit den obengenannten Vernetzungsmitteln und den genannten haftvermittelnden Gruppen enthaltenden Monomeren. Vorteilhaft beträgt die Hülle 10 bis 50 Gew.-% des gesamten kautschuk-elastischen Polymerisats. Die Kautschukteilchen können auch mit einer harten Hülle versehen werden, z. B. aus Styrol, Styrol-acrylnitril oder Methylmethacrylat, jedoch sollte sie so klein wie möglich sein, da sie nicht wesentlich zu den Kautschukeigenschaften der Formmassen beiträgt.

Das Kautschuk-elastische Polymerisat B ist soweit vernetzt, daß die erfindungsgemäße Mischung aus A und B eine um 5 bis 40°C, insbesondere 15 bis 30°C niedrigere Vicaterweichungstemperatur, gemessen nach DIN 53 460 als die des thermoplastischen Polymerisat A aufweist.

Daüber hinaus weisen die kautschuk-elastischen Plymerisate einen Quellungsindex in Toluol von 2 bis 8, insbesondere von 4 bis 8 auf.

Der Quellungsindex in Toluol wird wie folgt bestimmt:

1 g des ausgefällten Kautschuks wird bei 70°C unter einem Druck von 250 mbar für eine Zeit von 24 Stunden getrocknet. Anschließend wird die getrocknete Kautschukprobe in 100 ml Toluol 24 Stunden bei 23°C geschüttelt und dann das entstandene Gel mit 40 000 g abzentrifugiert. Das Gewicht des Gels wird bestimmt und anschließend dieses Gel 24 Stunden bei einer Temperatur von 70°C unter einem Druck von 250 mbar getrocknet und wiederum das Gewicht der so erhaltenen Probe bestimmt. Der Quellungsindex ergibt sich dann aus folgender Formel:

3

$$\text{Quellungsindex} = \frac{\text{Gewicht des gequollenen Gels}}{\text{Gewicht des nach Trocknung}}$$

Die erfindungsgemäßen Mischungen können als weitere Komponente C alle Zusatz- und/oder Hilfsstoffe enthalten, wie sie für thermoplastische Polymere üblich und gebräuchlich sind. Als solche Zusatz- und/oder Hilfsstoffe seien beispielsweise genannt Farbstoffe oder Pigmente, Antistatika, Antioxidantien, Flammschutzmittel und Schmiermittel. Als Zusatzstoffe sind auch verstärkend wirkende Füllstoffe wie Talkum, Glaskugeln oder Glasfasern zu verstehen. Die Zusatz- und/oder Hilfsstoffe werden in den üblichen und wirksamen Mengen, vorzugsweise in Mengen von 0,1 bis 30 Gew.-% auf die Summe der Komponenten A und B eingesetzt.

Die erfindumgsgemäßen elastomeren thermoplastischen Formmassen stellt man in der Regel her, indem man getrockneten oder schleuderfeuchten Kautschuk nach seiner Fällung aus der Dispersion mit dem thermoplastischen Polymeren A, gegebenenfalls unter Mitverwendung von weiteren Hilfsstoffen C, im Extruder mischt. Vorteilhaft verfährt man so, daß man zumächst in Extruder das thermoplastische Polymere A plastifiziert. Die Schmelze wird dann mit der Kautschukdispersion innig vermischt. Dabei verdampft spontan das Wasser und die Kautschukteilchen verteilen sich in der Schmelze. Besonders vorteilhaft verfährt man hierbei so, daß man in einem Extruder zunächst thermoplastische Polymere A plastifiziert und über einen im Verlauf des Extruders angeordneten Zugabeöffnungen die Kautschukdispersion zugibt, mit der Polymerisatschmelze innig vermischt und über eine Entgasungsöffnung die flüchtigen Anteile entfernt. Die Masse wird anschließend ausgepreßt, gekühlt und zerkleinert. Die Verarbeitungstemperatur liegt im üblichen Verarbeitungsbereich der betreffenden thermoplastischen Polymerisate A, z. B. bei Polyamiden zwischen 220 und 300° C. Vorteilhaft wählt man eine möglichst niedrige Temperatur um eine thermische Schädigung der Komponenten zu verhindern. Ferner hat es sich bewährt, wenn man die Kautschukdispersionen nicht auf einmal der Schmelze zuführt, sondern zunächst in einem ersten Durchgang ca. 50 Gew.-% der Kautschukmenge als Dispersion zuführt und dann in einem zweiten Durchgang die restliche Menge der Kautschukdispersion einarbeitet.

Die erfindungsgemäßen Formmassen besitzen wertvolle mechanische Eigenschaften und eignen sich zur Herstellung von techmischen Formteilen aller Art.

Die Ermittlung der Glasübergangstemperaturen des Kautschuks erfolgt nach der DSC-Methode (Macromol. Chem. 127 (1968), Seiten 1 ff).

Die Erfindung sei an folgenden Beispielen veranschaulicht.

**Beispiele**

In den Beispielen wurden die folgenden Emulsionspolymerisate verwendet:

**E 1**

Kautschukelastisches Polymerisat aus 60 Gew.-% eines Kerns bestehend aus
100 Gew.-Teilen n-Butylacrylat
40 % einer Schale, bestehend aus
98 Gew.-Teilen n-Butylacrylat
2,0 Gew.-Teilen Methacrylsäure

Hergestellt werden die Polymerisate durch Emulsionspolgmerisation in 66 Gew.-Teilen Wasser unter Verwendung von 1,0 Gew.-Teilen Natriumsalz einer $C_{12}$-$C_{18}$-Paraffinsulfonsäure als Emulgator und 0,35 Gew.-Teilen Kaliumpersulfat als Katalysator bei 65° C. Zunächst werden die Monomeren für den Kern zugegeben und polymerisiert und dann die Monomeren für die Schale zugefügt. Die Teilchengröße beträgt 0,4 μm monodispers, der Feststoffgehalt 60 Gew.-%, die Glasübergangstemperatur ca. -40° C, der Quellungsindex 31.

**E 2**

Kautschukelastisches Polymerisat aus 60 Gew.-% eines Kerns, aufgebaut aus
98 Gew.-Teilen n-Butylacrylat
2 Gew.-Teilen Tricyclodecenylacrylat und
40 Gew.-% einer Schale, aufgebaut aus
96,04 Gew.-Teilen n-Butglacrylat
1,96 Gew.-Teilen Methacrylsäure
2

Gew.-Teilen Tricyclodecenylacrylat

hergestellt wie E 1. Die Emulsion hat einen Feststoffgehalt von 60 Gew.-%, die Teilchengröße beträgt 0,4 μm monodispers, die Glasübergangstemperatur beträgt ca. -40°C, Quellungsindex 9,8.

**E 3**

Kautschukelastisches Polymerisat aus 60 Gew.-% eines Kerns, aufgebaut aus
96    Gew.-Teilen n-Butylacrylat
4    Gew.-Teilen Tricyclodecenylacrylat und
40    Gew.-% einer Schale, aufgebaut aus
94,08 Gew.-Teilen n-Butylacrylat
1,92  Gew.-Teilen Methacrylsäure
4    Gew.-Teilen Tricyclodecenylacrylat

hergestellt wie E 1, der Feststoffgehalt beträgt 60 Gew.-%, die Teilchengröße beträgt 0,4 μm, die Glasübergangstemperatur beträgt ca. -40°C, der Quellungsindex 8,3.

**E 4**

Kautschukelastisches Polymerisat aus 60 Gew.-% eines Kern, aufgebaut aus
94    Gew.-Teilen n-Butylacrylat
6    Gew.-Teilen Tricyclodecenylacrylat und
40    Gew.-% einer Schale, aufgebaut aus
92,12 Gew.-Teilen n-Butylacrylat
1,88  Gew.-Teilen Methacrylsäure
6    Gew.-Teilen Tricyclodecenylacrylat

hergestellt analog E 1.
    Teilchengröße 0,4 μm monodispers
    Glasübergangstemperatur ca. -40°C
    Feststoffgehalt 60 %
    Quellungsindex 8,0.

**E 5**

Kautschukelastisches Polymerisat aus 60 Gew.-% eines Kerns, aufgebaut aus
92    Gew.-Teilen n-Butylacrylat
8    Gew.-Teilen Tricyclodecenylacrylat und
40    Gew.-% einer Schale, aufgebaut aus
90,16 Gew.-Teilen n-Butylacrylat
1,84  Gew.-Teilen Methacrylsäure
8    Gew.-Teilen Tricyclodecenylacrylat

hergestellt durch Emulsionspolymerisation analog E 1.
    Feststoffgehalt 60 %
    Teilchengröße 0,4 μm
    Glasübergangstemperatur ca. -40°C
    Quellungsindex 6,7.

**Beispiele 1 und 2 sowie Vergleichsbeispiele 1 bis 3**

Die Herstellung der thermoplastischen Formmassen erfolgte in zwei Durchgängen durch einen Extruder. Das Polyamid wurde am Einzug des Extruders zugeführt und bei einer Temperatur von 250°C plastifiziert. Im einer darauffolgenden Zone wurde die wäßrige Suspension des kautschukelastischen Polymerisats dosiert zugeführt (1 T. Polyamid zu 1 T. Kautschuk) und innig mit dem schmelzflüssigen Polyamid vermischt. In einer weiteren Zone wird das Wasser spontan verdampft und abgeführt und anschließend die Formmassen gestrangt, gekühlt

5

und zerkleinert. In dem zweiten Durchgang durch den Extruder wurde soviel Kautschukdispersion in das Produkt aus dem ersten Schritt eingebracht, um die fertigen Abmischungen herzustellen. Die verwendeten Kautschuksorten (Emulsionen) das Mischungsverhältnis sowie die erzielten Ergebnisse an spritzgegossenen Formkörpern sind aus folgender Tabelle zu entnehmen.

**Tabelle**

| | Vergleichsbeispiele | | | Beispiele | |
|---|---|---|---|---|---|
| | 1 | 2 | 3 | 1 | 2 |
| Kautschuk Nr. | E 1 | E 2 | E 3 | E 4 | E 5 |
| Quellungsindex | 31 | 9,8 | 8,3 | 8,0 | 6,7 |
| Gehalt an Kautschuk Gew.-% in der Formmasse | 7 | 73,4 | 73,4 | 74,2 | 7,6 |
| Shore-Härte | x | 22 | 28 | 32 | 35 |
| Reißfestigkeit N/mm$^2$ | | 5 | 7 | 9 | 10 |
| Reißdehnung % | | 29 | 52 | 65 | 65 |
| Abrieb mg | | 430 | 230 | 180 | 190 |
| E-Modul N/mn$^2$ | | zu weich | | 350 | 470 |
| Vicattemperatur °C | | 30 | 58 | 181 | 192 |
| Bleibende Verformung nach 30 % Dehnung | | 3,4 | 1,9 | 1,9 | 1,6 |
| Lochkerbschlagzähigkeit -40°C | | 100 | 100 | 100 | 100 |

x nicht verarbeitbar

| | |
|---|---|
| Shore-Härte | nach DIN 53 505, Methode D |
| Reißfestigkeit) | nach DIN 53 455 |
| Reißdehnung) | |
| Abrieb | nach DIN 53 516 |
| E-Modul | nach DIN 53 460 |
| Bleibende Verformung | Hierbei wurde ein Formkörper aus dem Zugversuch nach DIN 53 455 auf 30 % gedehnt, anschließend aus den Klemmbacken gelöst und die bleibende Dehnung nach 1 min gemessen. |
| Locherbschlagzähigkeit | nach DIN 53 753 |

**Patentansprüche**

1. Elastomere thermoplastische Formmassen, enthaltend:
A) 5 bis 50 Vol.-Teile eines mindestens teilkristallinen thermoplastischen Polymeren mit einem Schmelzpunkt über 160°C als kohärente Phase;
B) 95 bis 50 Vol.-Teile mindestens eines durch Emulsionspolymerisation hergestellten, in der Komponente A dispergierten vernetzten kautschuk-elastischen Polymerisats mit einer Glasübergangstemperatur Tg unter -10°C, wobei die Summe von A und B 100 Vol.-Teile beträgt, mit der Maßgabe, daß die Mischung aus A und B eine um 5 bis 40°C niedrigere Vicaterweichungstemperatur gemessen nach DIN 53 460 als die Komponente A aufweist, und das kautschukelastische Polymerisat B einen Quellungsindex in Toluol von 2 - 8 hat und an der Oberfläche der Teilchen Molekülgruppen aufweist, die eine Haftung an den Molekülen des Polymeren A bewirken, und
C) gegebenenfalls übliche Hilfsstoffe in wirksamen Mengen.
2. Schlagzähe thermoplastische Formmassen nach Anspruch 1, dadurch gekennzeichnet, daß das kautschuk-elastische Polymerisat B zumindest an der Oberfläche der Teilchen Carbonsäure, Carbonsäureester, Carbonsäureamid oder Epoxygruppen enthält.
3. Schlagzähe thermoplastische Formmassen nach einem der Ansprüche 1 bis 2, dadurch gekennzeichnet, daß das kautschuk-elastische Polymerisat B aus Estern der (Meth)acrylsäure mit bis zu 15 Kohlenstoffatomen sowie 5 bis 10 Gew.-% radikalisch vernetzbaren Comonomeren mit 2 oder mehr Doppelbindungen pro Molekül aufgebaut ist.
4. Schlagzähe thermoplastische Formmassen nach einem der Ansprüche 1 bis 3, dadurch gekennzeichnet, daß sie durch inniges Vermischen einer Schmelze des Polymeren A mit einer wäßrigen Dispersion aus kautschuk-elastischen Polymerisats B unter gleichzeitigem Entfernen des dabei verdampfenden Wassers hergestellt worden sind.
5. Verfahren zur Herstellung der thermoplastischen Formmassen gemäß Anspruch 1, dadurch gekenn-

6

zeichnet, daß man eine Schmelze des Polymerisats A mit einer wäßrigen Dispersion des kautschuk-elastischen Polymeren B innig vermischt und gleichzeitig das dabei verdampfende Wasser entfernt.

**Claims**

1. Elastomeric thermoplastic molding material containing:
A) from 5 to 50 parts by volume of a partially or completely crystalline thermoplastic polymer having a melting point of above 160°C, as a coherent phase, and
B) from 95 to 50 parts by volume of one or more crosslinked elastomeric polymers which are prepared by emulsion polymerization, are dispersed in the component A and have a glass transition temperature $T_g$ of below -10°C, the sum of A and B being 100 parts by volume, with the proviso that the mixture of A and B has a Vicat softening temperature, measured according to DIN 53 460, which is 5 - 40°C lower than that of the component A, and the elastomeric polymer B has a swelling index, in toulene, of from 2 to 8 and possesses, on the surface of the particles, molecular groups which promote adhesion to the molecules of the polymer A with or without;
C) effective amounts of conventional assistants.

2. An impact-resistant thermoplastic molding material as claimed in either of claims 1 and 2, wherein the elastomeric polymer B contains carboxyl, carboxylic ester, carboxamide or epoxide groups, at least at the surface of the particles.

3. An impact-resistant thermoplastic molding material as claimed in claim 1, wherein the elastomeric polymer B consists of esters of (meth)acrylic acid of not more than 15 carbon atoms and from 5 to 10 % by weight of comonomers which possess 2 or more double bonds per molecule and can be crosslinked with free radicals.

4. An impact-resistant thermoplastic molding material as claimed in any of claims 1 to 3, which has been prepared by thorough mixing of a melt of the polymer A with an aqueous dispersion of the elastomeric polymer B, with the simultaneous removal of the water vaporized during this procedure.

5. A process for the preparation of a thermoplastic molding material as claimed in claim 1, wherein a melt of of the polymer A is mixed thoroughly with an aqueous dispersion of the elastomeric polymer B and at the same time the water vaporized in this procedure is removed.

**Revendications**

1. Matières à mouler thermoplastiques élastomères, composées de:
A) 5 à 50 parties en volume d'un polymère thermoplastique au moins partiellement cristallisé avec un point de fusion supérieur à 160°C comme phase cohérente, et
B) 95 à 50 parties en volume d'un polymère caoutchouc-élastique, préparé par une polymérisation en émulsion et réticulé, avec une température de transition vitreuse $T_g$ inférieure à -10°C, dispersé dans le composant A,
avec la condition que le mélange de A et de B ait une température de ramollissement selon Vicat, déterminée d'après la norme DIN 53 460, inférieure de 5 à 40°C à celle du composant A, le polymère caoutchouc-élastique B possède un indice de gonflement dans le toluène de 2 à 8 et, à la surface de ses particules, des groupes moléculaires qui en assurent l'adhérence aux molécules du polymere A,
ainsi qu'éventuellement,
C) des additifs usuels en des proportions efficaces.

2. Matières à mouler thermoplastiques résistant aux chocs suivant la revendication 1, caractérisées en ce que le polymère caoutchouc-élastique B possède, au moins à la surface de ses particules, des groupes acide carboxylique, ester carboxylique, amide carboxylique ou époxy.

3. Matières à mouler thermoplastiques résistant aux chocs suivant l'une des revendications 1 et 2, caractérisées en ce que le polymère caoutchouc-élastique B est constitué d'esters de l'acide (méth)acrylique comportant jusqu'à 15 atomes de carbone et de 5 à 10 % en poids de comonomères avec deux ou plus de deux doubles liaisons dans leur molécule, pouvant être réticulés par des radicaux libres.

4. Matières à mouler thermoplastiques résistant aux chocs suivant l'une des revendications 1 à 3, caractérisées en qu'ells sont préparées par un mélange à homogénéité d'un polymère A à l'état fondu et d'un polymère caoutchouc-élastique B en dispersion aqueuse avec élimination concomitante de l'eau qui s'évapore.

5. Procédé de préparation de matières à mouler thermoplastiques suivant la revendication 1, caractérisé en ce que l'on mélange à homogénétié un polymère A à l'état fondu et un polymère caoutchouc-élastique B en dispersion aqueuse avec élimination concomitante de l'eau qui s'évapore.